# EUROPÄISCHE PATENTANMELDUNG

(11) **EP 1 528 232 A1**
(43) Veröffentlichungstag der Anmeldung: **04.05.2005**
(21) Anmeldenummer: 04023781.0
(22) Anmeldetag: 06.10.2004
(51) Int. Cl.: F01P 7/04, F04D 25/06

(54) **Kühlanlage für einen Verbrennungsmotor eines Kraftfahrzeugs**

(30) Priorität: 16.10.2003 DE 10348130
(71) Anmelder: DaimlerChrysler AG, 70567 Stuttgart (DE)
(72) Erfinder: Braun, Hans, 70378 Stuttgart (DE); Körber, Ralf, 70188 Stuttgart (DE); Timmann, Michael, 72184 Eutingen (DE); Weeber, Jochen, 70794 Filderstadt (DE)

(57) **Zusammenfassung**

Die Erfindung betrifft eine Kühlanlage, bei der die Lüfterleistung mit einer Leistungssteuerung aus den Kennlinien des Lüftermotors, den Betriebsparametern des Kühlsystems sowie den in Form von Temperaturniveaus vorgegebenen Führungsgrößen bestimmt wird. Den verschiedenen einzuregelnden Temperaturniveaus sind hierbei verschiedene Kennlinien für die Ansteuerung des Lüftermotors zugeordnet. Wechselt die Führungsgröße für die Steuerung, so bedeutet das auch einen Wechsel der Kennlinien zur Ansteuerung des Lüftermotors. Um ein Aufheulen des Lüftermotors zu verhindern, wird bei einem Wechsel der Führungsgröße für die Lüftersteuerung der Betrieb des Lüftermotors für eine einstellbare Mindestwartezeit konstant gehalten. Während dieser Mindestwartezeit können sich die Betriebsparameter des Kühlsystems durch Umschalten des Kühlkreislaufes mit einem Thermostaten an die neue Führungsgröße so weit angepasst haben, dass ein Aufheulen des Lüftermotors nicht mehr zu befürchten ist.

## Beschreibung

Die Erfindung betrifft eine Kühlanlage für den Verbrennungsmotor eines Kraftfahrzeugs mit einer Leistungssteuerung eines Lüftermotors Die Lüftersteuerung bestimmt hierbei die Lüfterleistung anhand von Kennlinien des Lüftermotors sowie anhand der Betriebsparameter des Kühlsystems und anhand von vorgegebenen Führungsgrößen, die ein einzuregelndes Temperaturniveau vorgeben. Die Lüftersteuerung ermöglicht hierbei das Wechseln der einzuregelnden Temperaturniveaus und das Wechseln der Lüfterkennlinien, ohne dass beim Wechsel der Lüfterkennlinie der Lüftermotor anspricht.

Ein gattungsgemäße Kühlanlage ist aus der deutschen Patentanmeldung DE 197 28 814 A1 bekannt. In einem Kühlsystem für einen Verbrennungsmotor eines Kraftfahrzeuges sollen verschiedene Temperaturniveaus eingestellt werden. Die einzustellenden Temperaturniveaus sind hierbei die Führungsgrößen für eine Lüftersteuerung, die mit einem Steuerungsprogramm die erforderliche Lüfterleistung bestimmt. Die Lüfterleistung wird hierbei bestimmt aus den Betriebsparametern des Kühlsystems, der vorgegebenen Führungsgröße. Sowie aus Kennfeldern und Kennlinien des Lüftermotors. Der Betrieb des Lüfters wird hierbei so lange ausgesetzt, bis das Kühlmittel in dem Kühlsystem eine Mindesttemperatur erreicht und überschritten hat. Hiermit soll sichergestellt werden, dass der Verbrennungsmotor möglichst schnell auf Betriebstemperatur kommt und eine Kühlwirkung des Lüftermotors nicht vorzeitig einsetzen kann. Ist die Lüfterfunktion erst einmal freigegeben, so passt das Steuerungsprogramm die Lüfterleistung an das einzuregelnde Temperaturniveau an. Es sind hierbei insbesondere zwei Temperaturniveaus von 90 Grad Celsius und von 108 Grad Celsius vorgesehen, an die die Lüfterleistung anzupassen ist.

Die vorgenannte Kühlanlage ist somit effizient darin, die als Führungsgrößen vorgegebenen Temperaturniveaus so schnell wie möglich zu erreichen. Nachteile ergeben sich jedoch, wenn von einem hohen Temperaturniveau auf ein niederes Temperaturniveau gewechselt werden soll. Der Wechsel des Temperaturniveaus wird nämlich durch den Wechsel der Führungsgröße für die Leistungssteuerung vorgegeben. Diese Führungsgröße macht hierbei einen Schritt von 108 Grad Celsius auf 95 Grad Celsius. Für die Leistungssteuerung des Lüftermotors bedeutet dies, dass er aufgrund der großen Temperaturdifferenz bei einem Wechsel der Führungsgröße von einem hohen auf einen niederen Wert eine große Temperaturdifferenz zur aktuellen Ist-Temperatur feststellt, die es gilt möglichst schnell auszugleichen. Das bedeutet, dass der Lüftermotor mit maximaler Leistung aufheult. Dies hat zwar den Vorteil, dass das niedere Temperaturniveau so schnell wie möglich erreicht wird, ist aber in der Regel weder erwünscht noch notwendig. Das Aufheulen des Lüftermotors führt daher zu einer Lärmbelästigung und zu einem unnötigen Energieverbrauch.

An dieser Stelle setzt die Erfindung ein. Die Erfindung macht es sich nämlich zur Aufgabe, die Kühlanlage soweit zu verbessern, dass bei einem Wechsel des einzuregelnden Temperaturniveaus von einem hohen Wert auf einen niederen Wert ein Aufheulen des Lüftermotors unterbleibt.

Diese Aufgabe wird gelöst mit einer Kühlanlage nach Anspruch 1. Vorteilhafte Ausgestaltungen der erfindungsgemäßen Vorrichtung sind in den Unteransprüchen und in der Beschreibung der Ausführungsbeispiele enthalten.

Die Lösung gelingt mit einer Kühlanlage, bei der die Lüfterleistung mit einer Leistungssteuerung aus den Kennlinien des Lüftermotors, den Betriebsparametern des Kühlsystems sowie den in Form von Temperaturniveaus vorgegebenen Führungsgrößen bestimmt wird. Den verschiedenen einzuregelnden Temperaturniveaus sind hierbei verschiedene Kennlinien für die Ansteuerung des Lüftermotors zugeordnet. Wechselt die Führungsgröße für die Steuerung, so bedeutet das auch einen Wechsel der Kennlinien zur Ansteuerung des Lüftermotors. Um ein Aufheulen des Lüftermotors zu verhindern, wird bei einem Wechsel der Führungsgröße für die Lüftersteuerung der Betriebspunkt des Lüftermotors für eine einstellbare Mindestwartezeit konstant gehalten. Während dieser Mindestwartezeit können sich die Betriebsparameter des Kühlsystems durch Umschalten des Kühlkreislaufes mit einem Thermostaten an die neue Führungsgröße so weit angepasst haben, dass ein Aufheulen des Lüftermotors nicht mehr zu besorgen ist.

In einer vorteilhaften Ausgestaltung der Erfindung wird der Anlauf des Lüftermotors mit einem Filter, der in die Ansteuerung des Lüftermotors zugeschaltet wird, gedämpft. Dadurch wird ein langsames Anlaufen des Lüfters ermöglicht, auch dann, wenn bei einem Wechsel des einzuregelnden Temperaturniveaus große Temperaturdifferenzen zu den aktuellen Ist-Temperaturen des zu kühlenden Systems auftreten. Vorzugsweise hat dieser Filter eine sogenannte PT1-Charakteristik.

Weitere vorteilhafte Ausgestaltungen der Erfindung beinhalten die Möglichkeit die Mindestwartezeit bis zum Einsetzen des Lüftermotors und die Art und Weise eines eventuellen notwendigen Lüfteranlaufs gezielt an die Systembedingungen anzupassen. Hierzu kann zum Beispiel die Mindestwartezeit in Abhängigkeit der thermischen Belastung des Verbrennungsmotors verkürzt werden oder es können die Filtercharakteristiken, mit denen das Anlaufen des Lüftermotors beeinflusst wird, gezielt verändert werden, so dass der Lüfter schneller auf größere Leistungen hoch läuft. Mit einer Sensorüberwachung des Verbrennungsmotors, des Kühlkreislaufs und der Umgebungsbedingungen kann die zeitliche Dauer der Wirksamkeit einer angepassten Filtereinstellung reduziert werden, wenn sich die Betriebsbedingungen zu stark ändern, als dass die ausgewählten Filtereinstellungen noch sinnvoll wären. Hierzu wird zum Beispiel die Mindestwartezeit für das Aussetzen des Lüftermotors in Abhängigkeit des einzuregelnden Temperaturniveaus oder der aktuellen Betriebsparameter eingestellt. Ebenso werden die Filtereinstellungen in Abhängigkeit der aktuellen Betriebsparameter eingestellt.

Im folgenden wird die Erfindung ohne Beschränkung der Allgemeinheit am Beispiel einer Kühlanalge für einen Verbrennungsmotor näher erläutert. Dazu wird auf die folgenden Zeichnungen Bezug genommen. Es zeigen:
- Figur 1:: einen Vergleich zwischen einer Lüfteransteuerung aus dem Stand der Technik und zwei Beispielen einer Lüfteransteuerung gemäß der Erfindung,
- Figur 2:: eine typische Kühlanalge für einen Verbrennungsmotor, bei dem die Temperaturregelung und die Lüfteransteuerung mit einem Steuergerät erfolgen, in dem mit einem Steuergerät die gemäß der Erfindung wichtigsten Einflussgrößen verarbeitet werden,
- Figur 3:: einen vereinfachten Funktionsrahmen und Signalflussplan für die Lüftersteuerung,
- Figur 4:: eine zeitliche Abfolge der mit dem Signalflussplan nach Figur 3 getroffenen Einstellungen und deren zeitlichen Einfluss auf den Lüfter und die Kühlwasser-Ist-Temperatur.

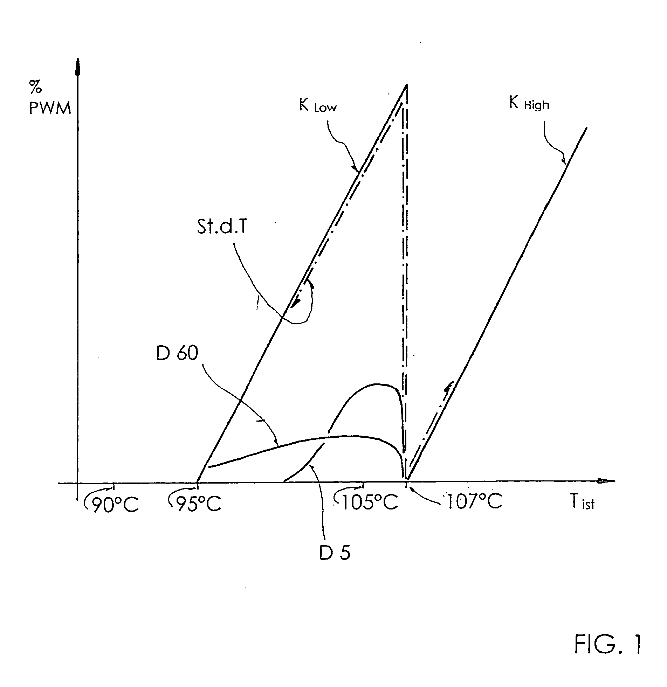

Üblicherweise werden Lüftermotoren als Sicherung gegen Überhitzung der Kühlanlage und des Verbrennungsmotors eingesetzt. Die Kühlanlage hat dabei üblicherweise neben der Lüftersteuerung eine primäre Temperaturregelung in Form eines Thermostaten. Mit dieser primären Temperaturregelung wird die Temperatur im Kühlsystem bevorzugt geregelt. Insbesondere bei Verbrennungsmotoren werden für die primäre Temperaturregelung Thermostaten eingesetzt, mit denen geschlossene Kühlkreisläufe umgeschaltet werden. Thermostaten arbeiten hierbei wesentlich energieschonender als Lüftermotoren und haben zu dem den Vorteil, dass sie die im System befindliche Energie besser im System belassen. Lüftermotoren haben hierbei den Nachteil, dass sie viel Energie verbrauchen nur zu dem Zweck, Energie aus einem bestehenden System herauszunehmen. Es ist jedoch besser, die Energie im System zu belassen und zu versuchen, daraus möglichst viel Wirkleistung entnehmen zu können. Die Temperaturregelung in einem Kühlsystem erfolgt deshalb vorzugsweise mit einer energieschonenden Primärregelung, während der Lüftermotor und die Lüftersteuerung lediglich als zusätzliche Sicherung eingesetzt werden, wenn mit der Primärregelung eine verlässliche Temperaturregelung nicht mehr eingehalten werden kann. Insbesondere in Kraftfahrzeugen soll deshalb der Lüfter möglichst überhaupt nicht zur Temperaturregelung im Kühlsystem herangezogen werden. Bei bekannten Lüftersteuerungen aus dem Stand der Technik ergeben sich hierbei jedoch dann Probleme, wenn wie eingangs bereits ausgeführt, das Temperaturniveau in einem Kühlsystem von einem hohen Wert auf ein niedrigeres Temperaturniveau abgesenkt werden soll. Diese Probleme werden anhand von Figur 1 anschaulich dargestellt und es wird zugleich die vorteilhafte Wirkungsweise einer erfindungsgemäßen Lüftersteuerung dem Stand der Technik gegenüber gestellt.

In Figur 1 ist das Abtastverhältnis einer Pulsweitenmodulation zur Ansteuerung eines Lüftermotors in Prozent PWM gegenüber der Temperatur im Kühlsystem aufgetragen. Mit dem Kühlsystem sollen zwei verschiedene Temperaturniveaus eingeregelt werden können. Ein Temperaturniveau bei 90 Grad und ein zweites Temperaturniveau bei 105 Grad Celsius. Die Temperaturregelung soll überwiegend mit einer Primärregelung erfolgen. Der Lüfter soll als zusätzliches Sicherheitselement gegen Überhitzung dann einspringen, wenn mit der Primärregelung die vorgegebenen Temperaturniveaus nicht gehalten werden können. Typischerweise wird man dazu für jedes Temperaturniveau einen Schwellwert vorsehen, ab dem der Lüftermotor mit steigender Temperatur mit zunehmender Leistung für mehr Kühlung des Systems sorgt. Im Ausführungsbeispiel der Figur 1 ist für das Temperaturniveau von 90 Grad ein Schwellwert von 95 Grad Celsius und für das Temperaturniveau von 105 Grad Celsius ein Schwellwert von 107 Grad Celsius vorgesehen. Je höher die Ist-Temperatur gegenüber diesem Schwellwert abweicht, desto mehr Kühlleistung wird erforderlich sein, um zu dem ursprünglichen einzuregelnden Temperaturniveau zurückzukommen. Für die PWM Ansteuerung des Lüftermotors ergeben sich hierbei für jedes einzuregelnde Temperaturniveau im einfachsten Fall Lüfterkennlinien und bei komplexen Sachverhalten Temperaturkennfelder aus mehreren Lüfterkennlinien, aus denen zu jeder Ist-Temperatur des Kühlmittels im Kühlsystem ein gewünschtes Ansteuersignal für die Leistungsregulierung des Lüftermotors entnehmbar ist. Im Ausführungsbeispiel der Figur 1 sind das die beiden Kennlinien K_{high}, K_{low} bei einem Wechsel des einzuregelnden Temperaturniveaus von 105 Grad Celsius nach 90 Grad Celsius wird für die Lüftersteuerung im Prinzip auch die Kennlinie von K_{high} nach K_{low} gewechselt. Die Ist-Temperatur des Kühlsystems wird jedoch dem Wechsel der Führungsgröße von 105 Grad Celsius nach 90 Grad Celsius nicht sofort folgen können. Für Lüftersteuerungen aus dem Stand der Technik ergibt sich bei diesem Szenario daher das folgende Problem, dass bei einem Wechsel der Führungsgröße auf 90 Grad Celsius die Lüftersteuerung eine extreme Überhitzung des Kühlsystems feststellen wird und der Lüftermotor am oberen Leistungsende seiner Kennlinie anspringen wird. Der Lüftermotor wird regelrecht aufheulen. In Figur 1 ist der Verlauf des Ansteuerungssignals über die Pulsweitenmodulation des Lüftermotors nach dem Stand der Technik strichpunktiert dargestellt und mit StdT bezeichnet. Man erkennt, dass bei einem Wechsel der Führungsgröße von hoch nach tief der Arbeitspunkt von dem unteren Punkt der Kennlinie K_{high} für das obere Temperaturniveau auf einen oberen hohen Punkt der Kennlinie K_{low} für das untere Temperaturniveau springen wird. Dies gilt es, mit der Erfindung zu verhindern. Erfindungsgemäß wird dies gelöst, in dem die Lüfteransteuerung bei einem Wechsel der Führungsgröße zunächst für eine Mindestzeit ausgesetzt wird, um der Primärregelung die Möglichkeit zu geben, das tiefere Temparaturniveau im Kühlsystem einzustellen. Ist nach Ablauf der Mindestwartezeit das tiefere Temperaturniveau mit der Primärregelung noch nicht erreicht, so kann immer noch ein Aufheulen des Lüftermotors verhindert werden, in dem man dafür Sorge trägt, dass der Lüftermotor nicht sofort mit maximaler Leistung anspringt. Dies erfolgt erfindungsgemäß durch Filter, mit denen man abrupte Lastwechsel am Lüftermotor abschwächt. Dies kann zum Beispiel dadurch erfolgen, dass man das Ansteuersignal für den Lüftermotor zwar aus der Kennlinie des Lüftermotors entnimmt, jedoch damit nicht direkt den Lüftermotor ansteuert, sondern mit einem vorgeschalteten Filter dafür Sorge trägt, dass sich die Lüfterleistung asymptotisch an den Arbeitspunkt auf der Lüfterkennlinie annähert. Während dieser Zeit hat die Primärregelung Gelegenheit eine Temperaturabsenkung zu bewirken, die noch durch den schwach anlaufenden Lüfter unterstützt werden wird. Durch den zeitlich verzögerten Anlauf gegebenenfalls in Kombination mit einem noch zusätzlich gedämpften Anlauf des Lüftermotors ergibt sich mit dem erfindungsgemäßen Verfahren beziehungsweise mit dem erfindungsgemäßen Steuerungsprogramm eher ein Signalverlauf für die Pulsweitenmodulation des Lüftermotors wie er in den Kurven D5 und D60 dargestellt ist. Der Verlauf der Kurve D60 entspricht hierbei einem starkdämpfenden Filter, während der Verlauf der Kurve D5 einem schwachdämpfenden Filter in der Anlaufsteuerung des Lüfters entspricht.

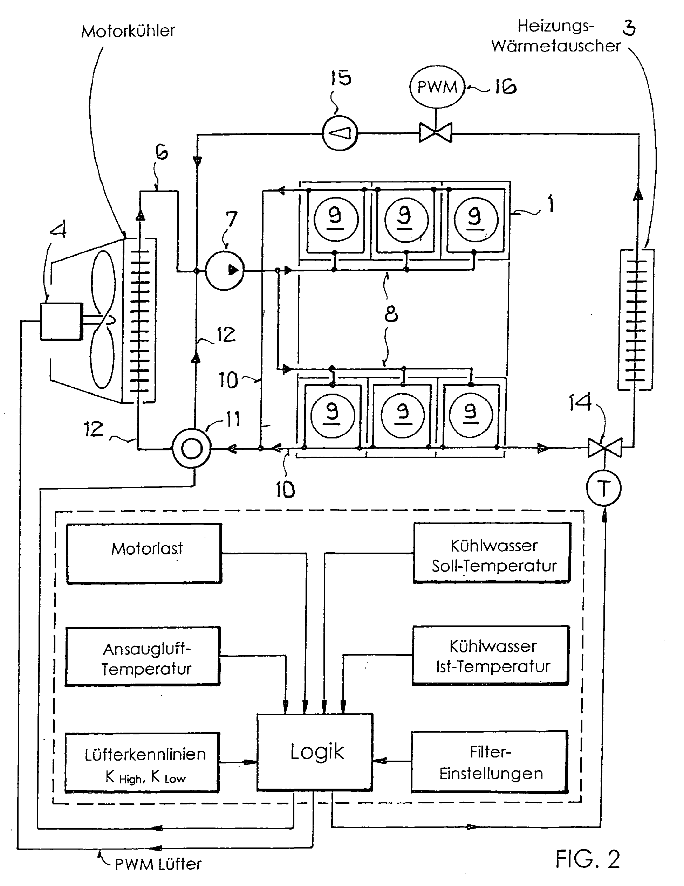

Figur 2 zeigt schematisch ein typisches Kühlsystem für einen Sechszylinder-Verbrennungsmotor 1. Neben dem Verbrennungsmotor sind in das Kühlsystem ein Fahrzeugkühler 2 und ein Heizungswärmetauscher 3 integriert. Die Kühlleistung des Fahrzeugkühlers kann mit einem elektrisch angetriebenen Lüfter 4 beeinflusst werden. Zur Regulierung der Lüfterleistung wird der elektrische Motor des Lüfters mit einem Steuergerät 5 geregelt. Aus dem Fahrzeugkühler wird mittels der Vorlaufleitung 6 gekühltes Kühlmittel entnommen und mit der Kühlmittelpumpe 7 in die Kühlleitungen 8 zur Speisung der nicht näher dargestellten Kühlkanäle für die Verbrennungszylinder 9 eingespeist. Von den Verbrennungszylindern 9 wird das erhitzte Kühlmittel über Rückleitungen 10 zu einem Dreiwegethermostaten 11 geführt. Je nach Stellung der Ventile in dem Dreiwegethermostaten 11 gelangt das Kühlmittel aus dem Verbrennungsmotor über den Kühlerrücklauf 12 wieder zurück in den Fahrzeugkühler oder über den Kühlerkurzschluss 13 und die Kühlmittelpumpe 7 wieder zurück in die Kühlleitungen 8 des Verbrennungsmotors.

Je nach Stellung der Ventile im Dreiwegethermostaten 11 kann das Kühlsystem hierbei in an sich bekannter Weise im Kurzschlussbetrieb, im Mischbetrieb oder im großen Kühlkreislauf gefahren werden. Der Heizungswärmetauscher 3 ist über ein temperaturgesteuertes Absperrventil 14 an den Hochtemperaturzweig des Kühlsystems im Verbrennungsmotor angeschlossen. Der Durchsatz nach Öffnen des Absperrventils 14 durch den Heizungswärmetauscher kann zur Regulierung der Heizleistung mit einer zusätzlichen elektrischen Kühlmittelpumpe 15 und einem getakteten Absperrventil 16 reguliert werden.

Die Ansteuerung der Betätigungselemente an den Ventilen des Dreiwegethermostaten 11 wird hierbei von dem Steuergerät 5 eingestellt. In dem Steuergerät ist ein logisches Bauelement Logik in Form einer mikroelektronischen Recheneinheit enthalten. Vorzugsweise wird das Steuergerät durch das Steuergerät der Motorelektronik gebildet oder ist ein Bestandteil im Steuergerät der Motorelektronik. Mit dem Steuergerät 5 wird hierbei der Dreiwegethermostat 11 sowie der Lüftermotor 4 angesteuert. Die Ansteuerung des Heizelementes in dem Dreiwegethermostaten 11 erfolgt hierbei in an sich bekannter Weise. Der Dreiwegethermostat 11 ist hierbei das Stellelement für die eingangs angesprochene Primärregelung, die ebenfalls als Steuerprogramm für die Ansteuerung des Heizelements in dem Dreiwegethermostaten 11 in dem Steuergerät 5 implementiert ist. Durch geeignete Ansteuerung des Dreiwegethermostaten 11 können in dem Kühlsystem für den Verbrennungsmotor insbesondere 3 verschiedene Temperaturniveaus von 80 Grad Celsius, 90 Grad Celsius, 105 Grad Celsius eingestellt und geregelt werden. Die Einstellung der Temperaturniveaus erfolgt hierbei überwiegend lastgeregelt. Das heißt, aus den Betriebsarten des Verbrennungsmotors, die üblicherweise in der Motorelektronik eines modernen Verbrennungsmotors in Form von digitalen Signalwerten abgreifbar sind, wird aus den Anforderungen an den Motor die zu der aktuellen Anforderung geeignete Temperatur im Kühlsystem eingestellt. Wichtigste Einflussgröße ist hierbei die Motorlast, die insbesondere aus der Motordrehzahl, der angesaugten Luftmenge oder der in die Verbrennungszylinder eingespritzten Kraftstoffmenge bestimmt wird. Gelingt eine zufriedenstellende Temperaturregelung mit dem Dreiwegethermostaten 11 alleine nicht mehr, so kann für eine zusätzliche Kühlung der Lüfter eingesetzt werden. Die Ansteuerung des Lüftermotors 4 erfolgt hierbei ebenfalls mit dem Steuergerät 5. Üblicherweise werden die Lüftermotoren in ihrer Leistung mit einer Pulsweitenmodulation geregelt. Hierzu wird von einem Steuerprogramm aus den Betriebsparametern des Kühlsystems die erforderliche Kühlleistung berechnet und bei Kenntnis der aktuell erforderlichen Kühlleistung aus den Lüfterkennlinien das Abtastverhältnis der Pulsweitenmodulation ermittelt, mit dem die geforderte Kühlleistung erbracht werden kann. Die wichtigsten Einflussgrößen für die Ermittlung der geeigneten Lüfterleistung sind hierbei die aktuell anliegende Motorlast, die Kühlwasser-Soll-Temperatur, die Kühlwasser-IstTemperatur, die Ansauglauftemperatur sowie die Lüfterkennlinien. Sollen verschiedene Temperaturniveaus mit dem Kühlsystem gefahren werden, so können für die verschiedenen Temperaturniveaus verschiedene Lüfterkennlinien K_{high}, K_{low} zum Einsatz kommen.

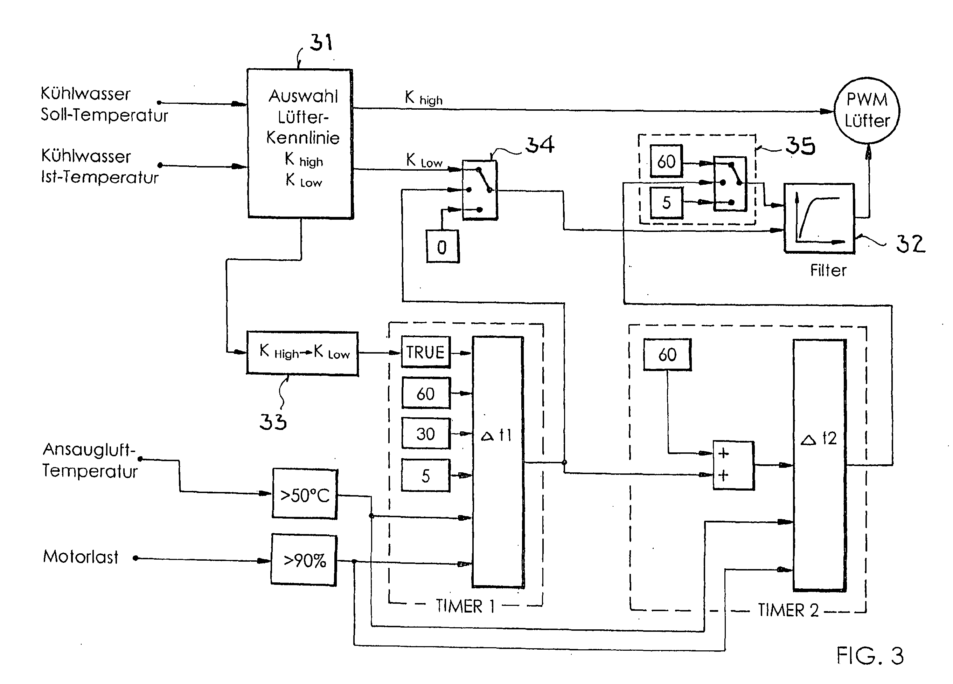

Erfindungsgemäß wird nun die Kühlanlage dahingehend verbessert, dass bei einer Absenkung des Temperaturniveaus in dem Kühlsystem ein Anlaufen des Lüftermotors zumindest für eine Mindestwartezeit unterbunden wird und falls nach der Mindestwartezeit noch ein Lüfteranlauf notwendig ist, dieser Lüfteranlauf derart abgedämpft wird, dass der Arbeitspunkt der Lüftersteuerung auf der Lüfterkennlinie asymptotisch angefahren werden kann. Dies gelingt erfindungsgemäß mit einem Steuerungsprogramm, wie es im folgenden in Zusammenhang mit der Figur 3 näher beschrieben wird.

Figur 3 zeigt den Funktionsrahmen und den Signalflussplan des erfindungsgemäßen Steuerungsprogramms. Eingangsseitig werden von dem Steuerungsprogramm Signalwerte verarbeitet, die vorzugsweise aus der Motorsteuerung und hier aus dem Motorsteuergerät entnommen werden. Es sind dies die Kühlwasser-Soll-Temperatur, die Kühlwasser-Ist-Temperatur, die Ansauglufttemperatur, sowie eine Kenngröße für die Motorlast, mit der der Verbrennungsmotor aktuell betrieben wird. Aus der vom Motormanagement vorgegebenen Kühlwasser-Soll-Temperatur wird mit einem Programmmodul 31 eine zugehörige Lüfterkennlinie oder ein zugehöriges Lüfterkennfeld ausgewählt und in einen Arbeitsspeicher eingelesen. Durch Überwachung der Kühlwasser-Ist-Temperatur kann mit dem Programmmodul 31 in dem aktuellen Kennfeld des Lüfters oder der aktuellen Kennlinie der Arbeitspunkt gefunden werden, mit dem der Lüftermotor zu betreiben ist. Ergebnis dieses Verarbeitungsprozesses ist ein Ansteuersignal an die Leistungselektronik des Lüftermotors. Vorzugsweise ist dieses Ansteuersignal ein Pulsweitenmodulationsverhältnis, mit dem die Leistungssteuerung des Lüftermotors eingestellt wird.

Ändert sich die vom Motormanagement vorgegebene Kühlwasser-Soll-Temperatur, so wird mit dem Programmmodul 31 zur Auswahl einer neuen Lüfterkennlinie der vorbeschriebene Prozess für die neue Kühlwasser-Soll-Temperatur durchgeführt. Das Programmmodul 31 schaltet gewissermaßen von einer Kennlinie K_{high} für die hohe Kühlwasser-Soll-Temperatur auf eine Kennlinie K_{low} für eine niedrigere Kühlwasser-Soll-Temperatur um. Weiterhin wird permanent die Kühlwasser-Ist-Temperatur überwacht. So dass auch auf der neuen Lüfterkennlinie K_{low} ein Arbeitspunkt für den Lüftermotor gefunden und eingestellt werden kann. Der Wechsel der Kühlwasser-Soll-Temperatur und der Wechsel der zugehörigen Kennlinie wird programmtechnisch mit einem Unterprogramm 33 ausgewertet. Es wird geprüft, ob sich die Kühlwasser-Soll-Temperatur von einer hohen Temperaturvorgabe auf eine niedrigere Temperaturvorgabe geändert hat. Ist dies der Fall, so wird ein weiteres Programmmodul, mit Timer 1 bezeichnet, aktiviert. In Figur 3 ist der Aktivierungsschritt symbolisch mit der Wahrheitsvariablen true dargestellt. Mit dem Programmmodul Timer 1 wird in Abhängigkeit weiterer Betriebsparameter des zu kühlenden Systems eine Mindestwartezeit Δt1 berechnet und bestimmt, während derer der Betriebpunkt des Lüftermotors konstant gehalten wird. Das Aussetzen von Veränderungen in der Leistungssteuerung des Lüftermotors erfolgt zweckmäßigerweise derart, dass mit dem Programmmodul Timer 1 ein Schaltvorgang 34 angesprochen wird, mit dem die Ansteuerung des Lüftermotors unterbrochen werden kann. Wie lange die Leistungssteuerung des Lüftermotors auszusetzen ist, bestimmt sich aus den aktuellen Betriebsparametern des Verbrennungsmotors und des Kühlsystems. Vorgesehen sind Mindestwartezeiten von 5 Sekunden, 30 Sekunden, 60 Sekunden, in Figur 3 symbolisch als Eingabegrößen 5, 30 und 60 zu dem Programmmodul Timer 1 dargestellt. Wichtigste Einflussgrößen für die Bestimmung der Mindestwartezeit sind die aktuell anliegende Motorlast, die aktuell anliegende Ansauglufttemperatur des Verbrennungsmotors, die aktuelle Kühlwasser-Ist-Temperatur und die Größe des Temperatursprungs bei der vorgegebenen Kühlwasser-Soll-Temperatur. In modernen Verbrennungsmotoren werden je nach Leistungsanforderung an den Verbrennungsmotor von dem Motormanagement bis zu drei verschiedene Kühlwasser-Soll-Temperaturen an das Kühlsystem des Verbrennungsmotors vorgegeben und eingestellt. Typische Temperaturniveaus für die Kühlwasser-Soll-Temperaturen sind hierbei 80 Grad Celsius, 90 Grad Celsius und 105 Grad Celsius. Bei einem Wechsel der Kühlwasser-Soll-Temperatur von 105 Grad Celsius auf 80 Grad Celsius ist hierbei eine Mindestwartezeit von 60 Sekunden vorgesehen, bei einem Wechsel der Kühlwasser-Soll-Temperatur von 105 Grad Celsius auf 90 Grad Celsius ist eine Mindestwartezeit von 30 Sekunden vorgesehen. Die vorgenannten Mindestwartezeiten können abgebrochen werden, wenn dies zum Schutz gegen Überhitzung des Kühlsystems oder des Verbrennungsmotors notwendig ist. In allen Fällen ist jedoch eine Mindestwartezeit von 5 Sekunden vorgesehen. Die Möglichkeit die Mindestwartezeiten bei der Gefahr der Überlastung abzubrechen, stellt eine Schutzfunktion für den Verbrennungsmotor dar. Diese Schutzfunktion wird immer dann aktiviert, wenn die Kühlwasser-Ist-Temperatur einen kritischen Wert von zum Beispiel von 107 Grad Celsius übersteigt, wenn die Ansauglufttemperatur des Verbrennungsmotors über 50 Grad Celsius liegt, oder wenn die Motorlast des Verbrennungsmotors, bestimmt aus der Drehzahl des Verbrennungsmotors und dem Füllungsgrad der Verbrennungszylinder, über 90 Prozent der Maximallast des Verbrennungsmotors liegt. In diesen Fällen wird mit dem Timer 1 die Mindestwartezeit auf 5 Sekunden verkürzt, beziehungsweise, falls die Überlast des Verbrennungsmotors während der beiden längeren Wartezeiten von 60 Sekunden und 30 Sekunden auftritt, die längeren Mindestwartezeiten abgebrochen. Die Berechnung der aktuellen Motorlast und die Bestimmung der aktuellen Ansauglufttemperatur wird hierbei ebenfalls vom Motormanagement respektive dem Motorsteuergerät bestimmt und vom erfindungsgemäßen Steuerprogramm weiterverarbeitet. Im einfachsten Fall enthält für diese Weiterverarbeitung das Programmmodul Timer 1 Vergleichsoperationen, mit denen überprüft wird, ob die Betriebsparameter des Kühlsystems und des Verbrennungsmotors in den jeweils als zulässig definierten Bereichen liegen oder nicht.

Nach Ablauf der vom Timer 1 bestimmten Mindestwartezeit wird die Low-Kennlinie K_{low}, beziehungsweise genauer das auf Grundlage der Low-Kennlinie berechnete Ansteuersignal an den Lüftermotor, freigegeben. Die High-Kennlinie K_{high} wird nicht geschaltet und bleibt ständig aktiv. Die Freigabe der Kennlinie ist in Figur 3 symbolisch mit dem Schaltvorgang 34 dargestellt, der als Schalter ausgebildet sein kann oder bevorzugter Weise mit einer programmtechnischen Schaltoperation realisiert ist. Ist nach Umschalten der Kühlwasser-Soll-Temperatur und nach Ablauf der Mindestwartezeit die Temperaturdifferenz zwischen neuer Kühlwasser-Soll-Temperatur und aktueller Kühlwasser-Ist-Temperatur so groß, dass noch ein Lüftereinsatz notwendig wird, so wird der nun mögliche Lüfteranlauf mit dem erfindungsgemäßen Steuerungsprogramm abgedämpft. Damit wird ein Aufheulen des Lüfters verhindert. Ob ein Lüfteranlauf notwendig ist, wird mit dem Programmmodul 31 in an sich bekannter Weise berechnet, in dem geprüft wird, ob die Abweichung der Kühlwasser-Ist-Tempartur größer als tolerierbar ist.

Die Dämpfung des Lüfteranlaufs erfolgt mit einem einstellbaren digitalen Filter 32, mit dem das Ansteuersignal an die Elektronik des Lüftermotors gefiltert wird. Der Filter sorgt dafür, dass das filtereingangsseitig anliegende Ansteuersignal auf den Filterausgang mit einer asymptotisch auf den Eingangswert hochlaufenden Filterkennlinie übertragen wird. Vorzugsweise handelt es sich bei dem Filter um ein Filter mit sogenannter PT1-Charakteristik. Diese Filter zeichnen sich durch eine Filterkennlinie mit exponentiellem Verlauf aus, wobei die Zeitkonstante der Exponentialfunktion angibt, nach welcher Zeit das Ausgangssignal 66 Prozent des Wertes des Eingangssignal erreicht hat. Durch Wahl der Zeitkonstanten der Exponentialfunktion können diese Filter in ihrer Wirkung angepasst und eingestellt werden. Dies macht sich auch die Erfindung zunutze, in dem mit einem Unterprogramm 35 die Filterkonstante des Filters 32 austauschbar ausgeführt ist. Vorgesehen sind hierbei eine Zeitkonstante von 5 Sekunden und eine Zeitkonstante von 60 Sekunden. Die Umschaltung der Zeitkonstanten des Filters wird von dem Programmmodul Timer 2 getriggert, indem ein Auswahlvorgang 35 aktiviert wird. Der Auswahlvorgang ist in Figur 3 als Schaltvorgang dargestellt, wird jedoch in der Regel als programmtechnischer Auswahlprozess realisiert sein.

Mit dem Programmmodul Timer 2 wird die Dauer der Filtereinstellungen des vorgenannten Filters 32 eingestellt. Das Programmmodul Timer 2 dient hierbei hauptsächlich der Rücksetzung der Zeitkonstanten des Filters 32 von einer hohen Zeitkonstante auf eine niedrigere Zeitkonstante. In dem Ausführungsbeispiel der Figur 3 sind dies die beiden Zeitkonstanten 5 Sekunden und 60 Sekunden zur Beeinflussung der Zeitcharakteristik des Filters 32. Der Timer 2 setzt hierbei zeitlich auf das Ausgangssignal des Programmmoduls Timer 1 auf. Genauer wird das Ende der Mindestwartezeit Δt1 als zeitlicher Anknüpfungspunkt für die Aktivierung des Programmmoduls Timer 2 genommen. Mit dem Beginn der Mindestwartezeit Δt1 beziehungsweise mit dem Freischalten der Kennlinie K_{low} wird die Zeitkonstante des Filters 32 regelmäßig auf ihren hohen Wert von beispielsweise 60 Sekunden gesetzt. Diese Einstellung bleibt so lange aktiv, bis mit einem Umschaltsignal aus dem Programmmodul Timer 2 die Filterkonstante wieder auf den niedrigeren Wert von beispielsweise 5 Sekunden gesetzt wird. Dieses Rücksetzsignal wird von dem Programmmodul Timer 2 nach Ablauf einer Zeitdauer Δt2, die sich zeitlich an das Ende der Mindestwartezeit Δt1 anschließt, gegeben. Diese add-on-Zeit beträgt zum Beispiel regelmäßig 60 Sekunden. Liegen keine besonderen Umstände vor, so bleiben die Filtereinstellungen des Filters 32 nach Ablauf der Mindestwartezeit Δt1 für die Zeitspanne Δt2 von zum Beispiel 60 Sekunden aktiv.

Besondere Umstände liegen jedoch dann vor, wenn die Gefahr einer Überhitzung aufgrund zu hoher Dämpfungswirkung des Filters 32 besteht. Diese Gefahr kann dann bestehen, wenn die Filtereinstellungen lediglich einen langsamen Lüfteranlauf zulassen. Deshalb ist mit dem Programmmodul Timer 2 eine Schutzfunktion realisiert, mit der die Zeitdauer der Filtereinstellungen verkürzt werden kann. Hierzu wird mit dem Programmmodul Timer 2 ebenfalls die Ansauglufttemperatur des Verbrennungsmotors sowie die aktuelle Motorlast des Verbrennungsmotors durch Überwachung der entsprechenden Kenngrößen aus dem Motorsteuergerät mitgelesen. Übersteigt die Ansauglufttemperatur den Wert von 50 Grad Celsius oder liegt die Motorlast über einem Wert von 90 Prozent der maximalen möglichen Motorlast, so wird die Zeitkonstante des Filters 32 sofort auf den niedrigeren Wert von 5 Sekunden zurückgesetzt. Dadurch kann im Falle der Gefahr einer Überlastung der Lüfter schneller zu seiner Maximalleistung hochlaufen. Der Lüfter wird nämlich bei einer kleineren Zeitkonstante des Filters 32 schneller wirksam.

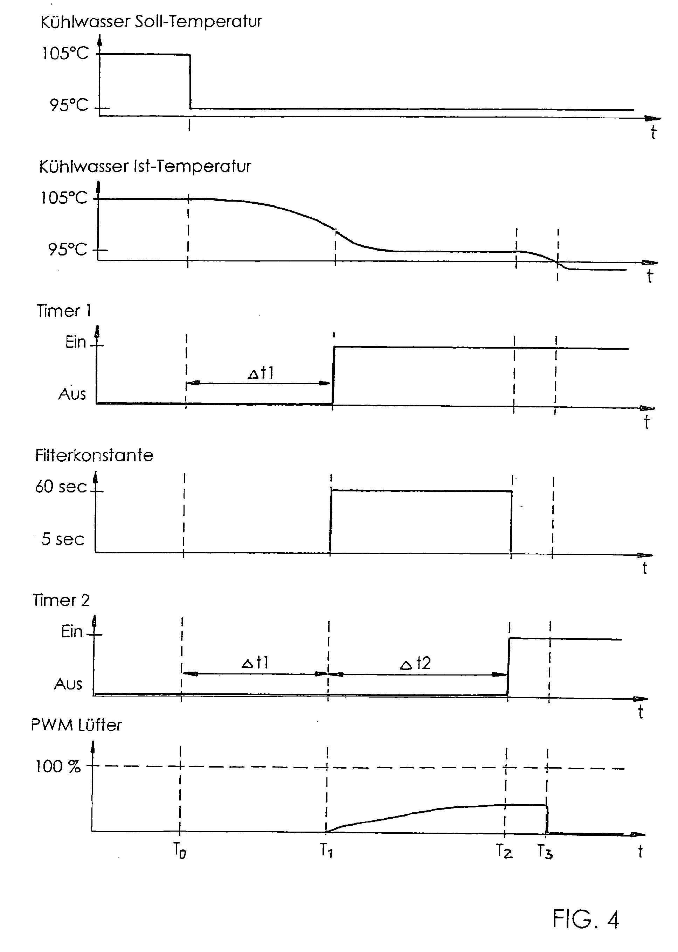

Das Zusammenspiel der einzelnen Programmmodule, wie in Figur 3 beschrieben, und die Wirkungsweise des erfindungsgemäßen Steuerprogramms wird im folgenden nochmals anhand von Figur 4 erläutert.

Figur 4 zeigt insgesamt sechs aufeinander bezogene Zeitdiagramme, von denen das erste Diagramm den zeitlichen Verlauf der Kühlwasser-Soll-Temperatur zeigt, das zweite Diagramm den Verlauf der Kühlwasser-Ist-Temperatur zeigt, das dritte Diagramm den zeitlichen Verlauf des Signalpegels am Ausgang des Programmmoduls Timer 1 zeigt, das vierte Diagramm das Umschalten der Filterkonstante des Filters 32 zeigt, das fünfte Diagramm den Signalpegelverlauf am Ausgang des Programmmoduls Timer 2 zeigt, und das sechste Diagramm schließlich die Auswirkungen der mit dem Steuerprogramm getroffenen Einstellungen auf das PWM-Verhältnis zur Ansteuerung des Lüftermotors zeigt. Startpunkt des ganzen Prozesses ist das Umschalten der Kühlwasser-Soll-Temperatur von einem hohen Wert, hier beispielsweise 105 Grad Celsius, auf einen niedrigeren Wert, hier zum Beispiel 95 Grad Celsius. Mit diesem Umschalten wird zunächst die Primärregelung zur Temperaturregelung im Kühlsystem des Verbrennungsmotors aktiv. Das heißt der Thermostat 11 der Primärregelung wird derart geschaltet, dass die Kühlwasser-Ist-Temperatur zu fallen beginnt. Für eine Zeitdauer Δt1, die vom Programmmodul Timer 1 berechnet und eingestellt wird, bleibt die Leistungssteuerung des Lüfters bis zum Zeitpunkt T1 ausgeschaltet. Nach Ablauf der Mindestwartezeit Δt1 wird die Lüfteransteuerung freigegeben. Allerdings erfolgt die Lüfteransteuerung über den Filter 32, der zunächst mit der Zeitkonstanten von 60 Sekunden arbeitet. Wie lange die Filtereinstellungen erhalten bleiben, wird durch das Programmmodul Timer 2 bestimmt. Mit dem Programmmodul Timer 2 wird eine Zeitdauer Δt2 berechnet und bestimmt, nach der die Filterkonstante des Filters 32 von 60 Sekunden auf 5 Sekunden zurückgesetzt wird. Danach, also ab dem Zeitpunkt T2, arbeitet das Filter bis zum nächsten Wechsel der Kühlwasser-Soll-Temperatur mit der Zeitkonstante von 5 Sekunden. In der Mehrzahl der Fälle wird das Rücksetzen der Zeitkonstanten des Filters keinen Einfluss mehr auf die Pulsweitenmodulation haben. In der Mehrzahl der Fälle wird nämlich nach Ablauf der Zeitdauer Δt2 also bis zum Zeitpunkt T2 der Lüftermotor bis zu seinem Arbeitspunkt auf der neuen freigeschalteten Kennlinie hochgelaufen sein. Das Rücksetzen der Zeitkonstante hat allerdings den Vorteil, dass die Lüftersteuerung mit einer kürzeren Zeitkonstante auf eine Änderung des Arbeitspunktes reagieren kann. Das heißt mit kürzerer Zeitkonstante des Filters kann der Lüftermotor besser einem Wandern des Arbeitspunktes auf der Lüfterkennlinie folgen.

Nach Ende der Mindestwartezeit Δt1 sollte im Regelfall mit der Primärregelung die Kühlwasser-Ist-Temperatur unterhalb der Einsatzschwelle für den Lüftermotor gefallen sein. Diese Einsatzschwelle liegt in dem hier diskutierten Ausführungsbeispiel bei 95 Grad Celsius. Ist die Kühlwassertemperatur nicht unter diese Einsatzschwelle gefallen, so setzt der Lüfter nach Ablauf der Mindestwartezeit Δt1 zum Zeitpunkt T1 mit einem gedämpften Anlauf ein. Die Dämpfung des Lüfteranlaufs bewirkt, dass sich das Ansteuersignal für die PWM-Modulation des Lüfters asymptotisch dem Arbeitspunkt auf der Lüfterkennlinie nähert. Dieser Verlauf ist exemplarisch im sechsten Diagramm der Figur 4 dargestellt. Der Anlauf des Lüftermotors bewirkt natürlich im Diagramm für die Kühlwasser-Ist-Temperatur ein schnelleres Absinken der Kühlwasser-Ist-Temperatur auf die neue Kühlwasser-Soll-Temperatur von 95 Grad Celsius. Erreicht die Kühlwasser-Ist-Temperatur die neue Soll-Temperatur zum Zeitpunkt T3 ist die Lüfterunterstützung nicht mehr notwendig und der Lüfter kann ausgeschaltet werden. Das Ausschalten des Lüfters wird hierbei bewirkt in dem das Tastverhältnis für die PWM-Modulation auf Null geht.

## Patentansprüche

1. Kühlanlage für einen Verbrennungsmotor (1), wobei mit Ventilen in einem Thermostaten ein kleiner Kühlmittelkreislauf ohne Kühler (2) und ein großer Kühlmittelkreislauf mit Kühler (2) temperaturgesteuert voneinander getrennt, miteinander verbunden oder in einem Mischbetrieb mit temperaturgeregeltem Mischungsverhältnis zusammengeschaltet werden können und die Betätigungseinheiten der Ventile im Thermostaten (11) von einer Steuerung (5) angesteuert werden und mit einem dem Kühler (2) zugeordneten Lüfter (4) mit einer Lüftersteuerung, wobei durch Öffnen und Schließen der Ventile im Thermostaten und durch die Lüftersteuerung eine von mehreren möglichen Kühlmittelsolltemperatur als Führungsgröße eingeregelt wird
**dadurch gekennzeichnet,**
**dass** jeder Kühlmittelsolltemperatur in der Lüftersteuerung eine Kennlinie (K_{high}, K_{low}) zur Leistungssteuerung zugeordnet ist und das bei einem Wechsel der Führungsgröße die Lüftersteuerung für eine einstellbare Mindestwartezeit (Δt1) lang den Betrieb des Lüftermotor (4) konstant hält.

2. Kühlanlage nach Anspruch 1,
**dadurch gekennzeichnet,**
**dass** bei einem Wechsel der Führungsgröße die Lüftersteuerung die Kennlinie (K_{high}, K_{low}) wechselt.

3. Kühlanlage nach Anspruch 2,
**dadurch gekennzeichnet,**
**dass** bei einem Wechsel der Kennlinie (K_{high}, K_{low}) ein Filter (32), insbesondere ein dämpfendes Filter, in die Ansteuerung des Lüftermotors zugeschaltet wird.

4. Kühlanlage nach Anspruch 3,
**dadurch gekennzeichnet,**
**dass** das Filter (32) PT1-Charakteristik hat.

5. Kühlanlage nach einem der Ansprüche 1 bis 4
**dadurch gekennzeichnet**,
mit einem Programmmodul (TIMER1) die Mindestwartezeit (Δt1) veränderbar und einstellbar ist.

6. Kühlanlage nach einem der Ansprüche 3 bis 5
**dadurch gekennzeichnet,**
**dass** mit einem zweiten Programmmodul (TIMER2) die Charakteristik des Filters veränderbar und einstellbar ist.

7. Kühlanlage nach Anspruch 6,
**dadurch gekennzeichnet,**
**dass** mit dem zweiten Programmmodul (TIMER2) und mit einer Auswahl (35) die Zeitkonstanten des Filters und die Dauer (Δt2) der Filtereinstellungen einstellbar sind.

8. Kühlanlage nach einem der Ansprüche 1 bis 7
**dadurch gekennzeichnet,**
**dass** die Mindestwartezeit (Δt1) in Abhängigkeit des einzuregelnden Temperaturniveaus oder der aktuellen Betriebsparameter eingestellt wird.

9. Kühlanlage nach einem der Ansprüche 3 bis 8
**dadurch gekennzeichnet,**
**dass** die Zeitkonstante des Filters in Abhängigkeit der aktuellen Betriebsparameter eingestellt wird.

10. Kühlanlage nach Anspruch 8 oder 9,
**dadurch gekennzeichnet,**
**dass** die Betriebsparameter insbesondere Motorlast und Ansauglufttemperatur eines Verbrennungsmotors (1) sind.
